Europäisches Patentamt

European Patent Office

Office européen des brevets

(11) Veröffentlichungsnummer: **0 297 491**
**B1**

(12) **EUROPÄISCHE PATENTSCHRIFT**

(45) Veröffentlichungstag der Patentschrift: **16.01.91**

(51) Int. Cl.⁵: **B 22 D 11/126, B 23 K 7/00**

(21) Anmeldenummer: **88110248.7**

(22) Anmeldetag: **28.06.88**

(54) **Bandguss-Brennschneidmaschine in Stranggiessanlagen.**

(30) Priorität: **01.07.87 DE 3721685**

(43) Veröffentlichungstag der Anmeldung:
**04.01.89 Patentblatt 89/01**

(45) Bekanntmachung des Hinweises auf die
Patenterteilung:
**16.01.91 Patentblatt 91/03**

(84) Benannte Vertragsstaaten:
**AT BE CH DE ES FR GB IT LI**

(56) Entgegenhaltungen:
**EP-A-0 171 023**
**EP-A-0 171 701**
**AT-B- 368 417**
**DE-A-1 558 245**
**DE-A-2 134 855**
**DE-A-2 262 949**
**DE-A-2 923 067**

(73) Patentinhaber: **AUTE Gesellschaft für autogene
Technik mbH
Wassbergstrasse 28
CH-8127 Forch/ZH (CH)**

(72) Erfinder: **Lotz, Horst K.
Fasanenweg 7
D-6240 Königsstein-Johanniswald (DE)**
Erfinder: **Thomma, Günter
Landsberger Strasse 17
D-6200 Wiesbaden-Delkenheim (DE)**
Erfinder: **Unger, Jürgen
Mühlhausener Strasse 12
D-6200 Wiesbaden-Biebrich (DE)**

(74) Vertreter: **Blumbach Weser Bergen Kramer
Zwirner Hoffmann Patentanwälte
Sonnenberger Strasse 100
D-6200 Wiesbaden 1 (DE)**

Courier Press, Leamington Spa, England.

**Beschreibung**

Die Erfindung betrifft eine Bandguß-Brennschneidmaschine in Stranggießanlagen zum thermochemischen Trennen von Material großer Breite und Dicke zum Walzen von Blechen aus Stahl, insbesondere mit hoher Ausfördergeschwindigkeit, mit einer Anklemmvorrichtung, die den Gleichlauf zwischen Strangband und der am Strangband verfahrbaren Bandguß-Brennschneidmaschine für den 7 Brennschneidvorgang herstellt.

Die Ausfördergeschwindigkeit des Bandgusses wird ständig erhöht, so daß auch an die Bandguß-Brennschneidmaschinen die Forderung gestellt wird, den Schneidvorgang immer schneller durchzuführen. Zu diesem Zweck ist es bekannt, beim Schneiden kurzer Stücklängen zwei oder mehrere Brenner in Strangrichtung hintereinander auf einem Schneidbrennerwagen anzuordnen, wie es die DE—A—21 34 855 zeigt. Dabei überspannt der Rahmen der Brennschneidmaschine den Gießstrang und ist auf beiden Seiten abgestützt, wobei die Brennschneidmaschine durch, Anklemmeinrichtungen mit dem Strang verbunden ist, wie es in der DE—A—29 23 067 dargestellt ist.

Bei einer derartigen Bandguß-Brennschneidmaschine ist aber als aufwendig anzusehen, daß diese auf beiden Seiten des Gießstranges abgestützt ist, wodurch es weiterhin erforderlich ist, daß genügend Platz für die Laufbahnen auf beiden Seiten des Gießstranges vorhanden ist. Bei einer derartigen Bandguß-Brennschneidmaschine bereitet es darüber hinaus größere Schwierigkeiten, eine möglichst gut abdichtende, den Schneidbereich umschließende Haube zum Schutz und zur Wärmehaltung anzubringen.

Der Erfindung liegt daher die Aufgabe zugrunde, eine Bandguß-Brennschneidmaschine verfügbar zu machen, die in platzsparender Weise einer hohen Strangausfördergeschwindigkeit entsprechen kann, indem sie in kurzer Zeit einen Schnitt durchführt, wobei diese Ausbildung desweiteren eine möglichst gut abdeckende Warmhaltehaube ermöglicht.

Die Erfindung besteht darin, daß die Brennschneidmaschine auf eine Brennschneidmaschinenlaufbahn nur längs einer Seite des Strangbandes abgestützt ist und mit einem Brennerarm ausgestattet ist, an dem mindestens zwei Brenner im Abstand hintereinander in Richtung des Schnittes angeordnet sind und daß der erste zum Anschneiden und Schneiden von der Kante des Strangbandes her vorgesehen ist und daß der zweite Brenner zum autogenen Lochstechen, Anschneiden oder Schneiden bestimmt ist.

Eine vorteilhafte Weiterbildung der Erfindung besteht darin, daß ein oder mehrere Schneidbrenner zum schnellen Anheizen des Materials auf Zündtemperatur mit einer Heizflamme und dazu mit einer Eisenpulverdüse ausgerüstet sind und daß eine Steuerung für eine Anheizzeit und für eine Zuschaltung des Schneidsauerstoffs bei gleichzeitiger angepaßter Bewegung zum Lochstechen mit Übergang in eine Schneidbewegung vorgesehen ist.

Zweckmäßig ist dabei vorgesehen, daß der Brennerarm wassergekühlt ist und alle Versorgungsleitungen für alle Brenner oder Eisenpulverdüsen im Inneren führt sowie alle Düsenaufnahmen mit austauschbaren Brennerstutzen trägt.

Eine Weiterbildung der Erfindung besteht darin, daß der Brennerarm im Bandgußbereich in austauschbare Brennerelemente unterteilt ist, die in ihren Längen den gewünschten Brennerabständen der Breite des Strangbandes entsprechen und mit O-Ring-Dichtungen für die durchfließenden Medien versehen sind und mit Flanschen zum Anschrauben untereinander und auf dem Brennerarmstumpf ausgerüstet sind.

Zur Vermeidung von Wärmeverlust sieht die Erfindung weiter vor, daß der Brennschneidbereich durch eine Haube abgedeckt ist und der Brennerarm durch einen Schlitz in diese Haube hineinragt.

Zum Doppelschneiden von kürzeren Stücklängen ist vorgesehen, daß die Brennschneidmaschine mit zwei Brennerarmen in einem vorzugsweise verstellbaren Abstand voneinander zum Doppelschneiden für kürzere Stücklängen ausgerüstet ist und einen dafür gemeinsamen oder zwei gleichartige Schneidvorschubantriebe besitzt.

Zur Entsorgung ist für die im Mitlaufbereich anfallende Schneidschlacke eine Schlackenauffangvorrichtung vorgesehen ist.

Für eine zweckmäßige Unterstützung schlägt die Erfindung mit Vorteil weiter vor, daß im Schneid- und Warmhaltebereich für die Unterstützung des Strangbandes abschwenkbare, außerhalb der Haube und der Schlackenauffangvorrichtung gelagerte und angetriebene Kragarmstützrollen vorgesehen sind.

Um den Eintrittsschlitz für die Warmhaltehaube möglichst gering zu halten, ist eine Einlauf- und Niederdrückkufe oder -rolle vor dem Bandeinlaufschlitz der Warmhaltehaube vorgesehen, wobei die Niederdrückrolle und die Meßrolle als ein Bauteil ausgebildet sein können.

Der Brenner kann zweckmäßig mit einem Zwischenstück versehen sein, in das eine Schneiddüse eingeschraubt ist.

Zweckmäßig bestehen die Brenner aus am Brennerarm angebrachten Düsenaufnahmen, wobei die Düsenaufnahmen mit Verlängerungsteilen versehen sind.

Die Erfindung soll nachstehend anhand eines Ausführungsbeispiels unter Bezugnahme auf die beigefügten zeichnungen näher erläutert werden.

In den Zeichnungen zeigen:

Fig. 1 die Seitenansicht einer Bandguß-Brennschneidmaschine und

Fig. 2 die Draufsicht auf eine Bandguß-Brennschneidmaschine nach Fig. 1.

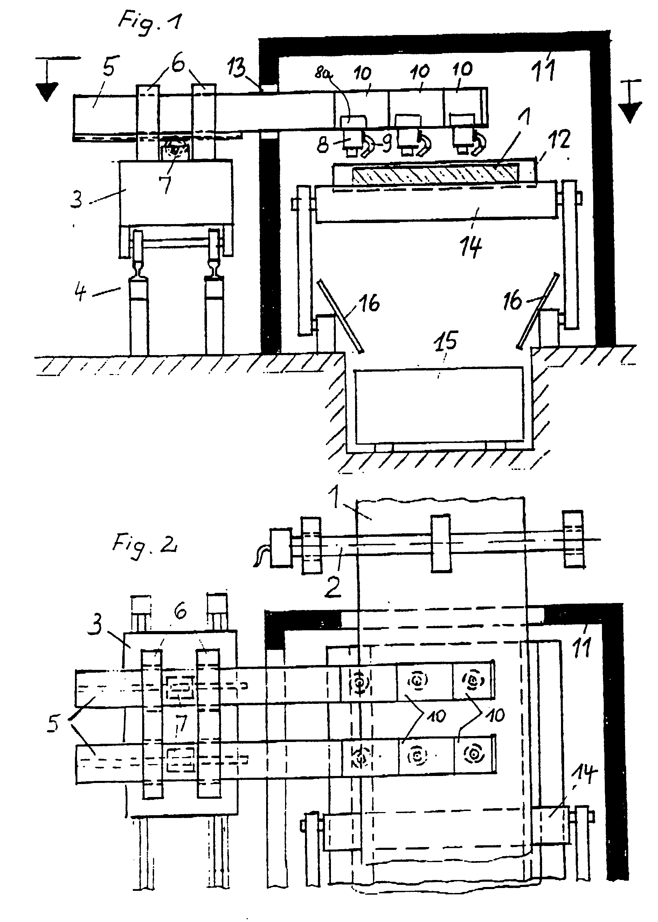

In Fig. 1 ist eine Bandguß-Brennschneidmaschine dargestellt, von der ein im Schnitt dargestelltes Strangband 1 geschnitten wird. Vor dem Einlauf des Strangbandes 1 ist eine in Fig. 2 dargestellte Meßrolle 2 angeordnet, die dazu dient, eine Bandguß-Brennschneidmaschine 3 im Gleichlauf zum Strangband 1 auf der Brennschneidmaschinenlaufbahn 4 zu bewegen. Die Bandguß-Brennschneidmaschine 3 trägt einen Brennerarm 5 oder Auslegermit Hilfe von Schiebelagern 6. Durch einenander Bandguß-Brennschneidmaschine 3 angeordneten Auslegerantrieb 7 kann dieser Arm 5 quer zur Bewegungsrichtung des Strangbandes 1 bewegt werden und damit die an dem Brennerarm 5 angeordneten Brenner 8. Den Brennern 8 sind Pulverdüsen 9 zugeordnet, wobei diese zu am Brennerarm 5 angeordneten Brennerelementen 10 zusammengefaßt sind. Der Brennschneidbereich ist durch eine Haube umschlossen, Brennerarm von der außen angeordneten Bandguß- Brennschneidmaschine 3 in das Innere der Bandniederhalter ausgebildet, so daß ein Nach-oben-Wölben des Strangbandes 1 vermieden ist und somit der Bandeinlaufschlitz 12 sehr klein gehalten werden kann. Durch einen Brennerarmschlitz 13 ragt der Brennerarm von der außen angeordneten Bandguß' Brennschneidmaschine 3 in das Innere der Warmhaltehaube 11 über das zu trennende Strangband 1, das über Bandstützrollen 14 bewegt wird. Zur Entsorgung ist im Brennschneidbereich ein Schlackenkübel 15 vorgesehen, wobei seitlich angeordnete Abweisbleche sicherstellen, daß die Schlacke in den Schlackenkübel 15 gelangt.

Im einzelnen sind Abwandlungen möglich; so können die Brennerelemente 10 auch mit nicht dargestellten Plasma- oder Laserbrennern versehen sein.

Die Bandguß-Brennschneidmaschine erfüllt auch die Forderung nach einer hohen Schneidgeschwindigkeit.

Gemäß der Erfindung wird der Brennerarm 5 so bewegt, daß der maschinennahe Brenner 8 das Strangband 1 fliegend anschneidet, wenn der oder die anderen davor über dem Band am Brennerarm angeordneten Schneidbrenner mit höchster Heizleistung die in Linie hinter dem Ausschnittpunkt liegenden Lochstechpunkte auf Zündtemperatur vorheizt und dann mit dem Ausschneiden außen das Lochstechen durch Schneidsauerstoffzufuhr beginnen, das dann gleichmäßig in eine Schneidgeschwindigkeit übergeht. Die Schneidbrenner 8 über dem Strangband 1 sind am Brennerarm 5 so weit voneinander und vom maschinennahen und an der Kante beginnenden Schneidbrenner 8 angeordnet, daß sie alle entweder zu der gleichen Zeit in den Schnitt des vorlaufenden Brenners 8 oder der äußerste Brenner 8 über der Anschneidkante einmünden. Damit wird ein quer über das Strangband 1 laufender Schnitt in einem der Anzahl der Brenner 8 entsprechenden Zeitteil der Zeit durchgeführt, die ein Brenner 8 allein zum Vollenden des ganzen Schnittes brauchen würde.

Da das Lochstechen mit einem Vorheizen durch die Brennerflamme eine den Umständen entsprechend zu lange Vorheizzeit erfordert und durch ungleiche Heizflammen der Brenner 8 bzw. durch den die Oberfläche des Strangbandes 1 abdeckenden Zünder die Sicherheit des gleichzeitigen Lochstechens und Schneidbeginns beeinträchtigen, wurden Pulverdüsen 9 zum Unterstützen des Lochstechens vorgesehen.

Bei Versuchen an kaltem Material von 30 mm Dicke mit einer typischen Starkschneiddüse für Brammen bis 400 mm wurde bei folgenden Daten ein zufriedenstellendes Lochstechen und Anschneiden erzielt:

| | | |
|---|---|---|
| Düsenabstand zum Werkstück: | | ·100 mm |
| Druck am Brennereingang: Schneidsauerstoff | | 9 bar |
| für Heizflamme | { Heizsauerstoff | 2,6 bar |
| | { Erdgas | 1,7 bar, |
| | Förderluft | · 2 bar. |

Dieser Förderluftdruck entspricht einer üblichen Pulverdüse (Innendurchmesser 6 mm) mit einem Pulververbrauch von etwa 12 g pro Lochstechversuch.

Nachdem die Heizflamme über dem Anschneidpunkt heizend angeordnet ist, wird der Eisenpulverzusatz eingeschaltet. Über eine Zeit von 2 bis 3 sec wird der Zufluß des Schneidsauerstoffes durch Öffnen am Regler gleichmäßig von 0 auf 9 bar erhöhend eingeschaltet. Gleichzeitig damit wird der Brenner 8 mit etwa 30 bis 50 mm/min lochstechend und anschneidend nach vorn bewegt. Danach wird der Pulverstrom abgeschaltet und die Schneidgeschwindigkeit von etwa 30 bis 50 mm/min binnen 2 bis 4 sec ansteigend auf etwa 600 mm erhöht. Dabei entsteht ein rundes Loch von etwa 20 mm Durchmesser, an das sich eine Schneidfuge von etwa 12 mm Breite anschließt, die dann in eine normale Schneidfuge von etwa 7 bis 8 mm übergeht.

Die zum Lochstechen eingesetzten Schneiddüsen 8 können mit geringen Mengen als Sparflammen weiterbrennen. Die extreme Kürze dieser Düsen erlaubt auch den Einsatz eines in den Brenner einschraubbaren Zwischenstückes, einer Zwischendüse, in die dann die Schneiddüse eingeschraubt wird. Nur wenn durch entsprechend häufigen Düsenwechsel das Zwischenstück 8a verschlissen ist, muß dieses ausgetauscht werden, während der Brenner an der Düsenaufnahme noch intakt ist. Die Ausbildung von Brennerelementen 10 als Teile des Brennerarmes 5 ermöglicht die Realisierung einer Reihe von Vorteilen. Die Brennerelemente 10 können beliebig einem Brennerarm 5 aufgeschraubt werden mit einem Abschlußdeckel am Ende des letzten Brennerelementes 10. Jeder Brenner wird vom Flansch zu Flansch von einer Versorgungsleitung für jedes Betriebsmittel und auch für den Kühlwassereinlauf durchzogen.

3

Beim Zusammenschrauben zweier Brennerelemente 10 am Brennerarm 5 wird ein Dichtring aus weichem Material, z. B. Kupfer, oder O-Ringe in entsprechende Ringnuten eingelegt. Die Brennerelemente 10 sind somit also praktisch nur mit Brennern 8 bzw. Düsenaufnahmen 8 versehene Verlängerungsteile des Brennerarmes 5. Sie können auf die Breite des Strangbandes 1 abgestimmt werden, so daß z. B. von vier Brennelementen 10 bzw. Brennern 8 der erste von außen anschneidet, die drei anderen bei 1/4, 1/2, 3/4 der Breite des Strangbandes 1 ein Loch stechen, so daß jeder Brenner 8 1/4 der Breite des Strangbandes 1 schneidet. Bei anderen Bandbreiten müssen andere Brenner- bzw. Düsenabstände gewählt werden.

Auf diese Weise ist eine wärmefeste, wassergekühlte Bandguß-Brennschneidmaschine verfügbar gemacht, bei der eine gasdichte Zuführung für Heizgas, Heizsauerstoff, Schneidsauerstoff, Luft und Eisenpulver sowie Kühlwasser gewährleistet ist. Eine Anpaßbarkeit an die jeweils gegossene Bandbreite durch geeignete Abstände der Düsen untereinander ist gegeben bei einem leichten und vor allem verschleißarmen Düsenaustausch, wobei während der Schneidpausen die Düsen mit Sparflammen weiterbrennen. Mit der erfindungsgemäßen Bandguß-Brennschneidmaschine kann hohen Gießgeschwindigkeiten entsprochen werden bei einer geringen Banddicke und größeren Bandbreite. Die Verringerung des Wärmeverlustes im Schneidbereich auf ein Minimum ermöglicht eine wirtschaftliche Weiterbearbeitung. Die vorliegende Bandguß-Brennschneidmaschine ermöglicht somit in optimaler Weise ein Trennen von dünnem Bandmaterial bei höchsten Gießgeschwindigkeiten.

## Patentansprüche

der am Strangband verfahrbaren Brandguß-Brennschneidmaschine für dem Brennschneidvorgang herstellt, dadurch gekennzeichnet, daß die Brennschneidmaschine auf eine Brennschneidmaschinenlaufbahn (4) nur längs einer Seite des Strangbandes (1) abgestützt ist und mit einem Brennerarm (5) ausgestattet ist, an dem mindestens zwei Brenner (8, 10) im Abstand hintereinander in Richtung des Schnittes angeordnet sind und daß der erste Brenner zum Anschneiden und Schneiden von der Kante des Strangbandes (1) her vorgesehen ist und daß der zweite Brenner (8) zum autogenen Lochstechen, Anschneiden oder Schneiden bestimmt ist.

2. Bandguß-Brennschneidmaschine nach Anspruch 1, dadurch gekennzeichnet, daß ein oder mehrere Schneidbrenner (8) zum schnellen Anheizen des Materials auf Zündtemperatur mit einer Heizflamme und dazu mit einer Eisenpulverdüse (9) ausgerüstet sind und daß eine Steuerung für eine Anheizzeit und für eine Zuschaltung des Schneidsauerstoffs bei gleichzeitiger angepaßter Bewegung zum Lochstechen mit Übergang in eine Schneidbewegung vorgesehen ist.

3. Bandguß-Brennschneidmaschine nach einem der Ansprüche 1 oder 2, dadurch gekennzeichnet, daß der Brennerarm (5) wassergekühlt ist und alle Versorgungsleitungen für alle Brenner (8) oder, Eisenpulverdüsen (9) im Inneren führt sowie alle Düsenaufnahmen mit austauschbaren Brennerstutzen trägt.

4. Bandguß-Brennschneidmaschine nach einem der Ansprüche 1 bis 3, dadurch gekennzeichnet, daß der Brennerarm (5) im Bandgußbereich in austauschbare Brennerelemente (10) unterteilt ist, die in ihren Längen den gewünschten Brennerabständen der Breite des Strangbandes (1) entsprechen und mit O-Ring-Dichtungen für die durchfließenden Medien versehen sind und mit Flanschen zum Anschrauben untereinander und auf dem Brennerarmstumpf ausgerüstet sind.

5. Bandguß-Brennschneidmaschine nach einem der Ansprüche 1 bis 4, dadurch gekennzeichnet, daß der Brennschneidbereich durch eine Haube (11) abgedeckt ist und der Brennerarm (5) durch einen Schlitz (13) in diese Haube (11) hineinragt.

6. Bandguß-Brennschneidmaschine nach einem der Ansprüche 1 bis 5, dadurch gekennzeichnet, daß die Brennschneidmaschine (3) mit zwei Brennerarmen (5) in einem vorzugsweise verstellbaren Abstand voneinander zum Doppelschneiden für kürzere Stücklängen ausgerüstet ist und einen dafür gemeinsamen oder zwei gleichartige Schneidvorschubantriebe besitzt.

7. Bandguß-Brennschneidmaschine nach einem der Ansprüche 1 bis 6, dadurch gekennzeichnet, daß für die im Mitlaufbereich anfallende Schneidschlacke eine Schlackenauffangvorrichtung (15, 16) zur Entsorgung vorgesehen ist.

8. Bandguß-Brennschneidmaschine nach einem der Ansprüche 1 bis 7, dadurch gekennzeichnet, daß im Schneid- und Warmhaltebereich für die Unterstützung des Strangbandes (1) abschwenkbare, außerhalb der Haube (11) und der Schlackenauffangvorrichtung (15, 16) gelagerte und angetriebene Kragarmstützrollen (14) vorgesehen sind.

9. Bandguß-Brennschneidmaschine nach einem der Ansprüche 1 bis 7, dadurch gekennzeichnet, daß eine Einlauf- und Niederdrückkufe oder -rolle (2) vor dem Bandeinlaufschlitz (12) der Warmhaltehaube (11) vorgesehen ist.

10. Bandguß-Brennschneidmaschine nach einem der Ansprüche 1 bis 9, dadurch gekennzeichnet, daß die Niederdrückrolle (2) und die Meßrolle (2) als ein Bauteil ausgebildet sind.

11. Bandguß-Brennschneidmaschine nach einem der Ansprüche 1 bis 10, dadurch gekennzeichnet, daß der Brenner (8) mit einem Zwischenstück (8a) versehen ist, in das eine Schneiddüse eingeschraubt ist.

12. Bandguß-Brennschneidmaschine nach einem der Ansprüche 1 bis 11, dadurch gekennzeichnet, daß die Brenner (8) aus am Brennerarm (5) angebrachten Düsenaufnahmen bestehen.

13. Bandguß-Brennschneidmaschine nach Anspruch 12, dadurch gekennzeichnet, daß die Düsenaufnahmen mit Verlängerungsteilen versehen sind.

# EP 0 297 491 B1

## Revendications

1. Machine d'oxycoupage pour une installation de coulée continue de bandes pour le découpage thermochimique de matériaux de grande largeur et de forte épaisseur pour le laminage de tôles d'acier, en particulier avec une vitesse d'entraînement élevée, avec un dispositif de serrage, qui assure le synchronisme entre la bande continue et la machine d'oxycoupage pour le processus d'oxycoupage, caractérisée en ce que la machine d'oxycoupage est soutenue par une voie de roulement (4) uniquement le long d'un côté de la bande continue 1, laquelle machine est pourvue d'un bras porte-chalumeaux (5) sur lequel sont disposés au moins deux chalumeaux coupeurs (8, 10) l'un derrière l'autre avec un espace entre eux, en direction de la coupe et en ce que le premier chalumeau est prévu pour l'amorçage de la coupe et pour la coupe à partir du bord de la bande continue (1) et en ce que le deuxième chalumeau (8) est destiné au perçage, à l'amorçage de la coupe ou au découpage.

2. Machine d'oxycoupage de bande continue suivant la revendication 1, caractérisée en ce qu'au moins un chalumeau découpeur (8) est muni d'une flamme de chauffe et en outre d'une buse d'alimentation en poudre de fer (9) pour préchauffer la matière à la température et en ce qu'une commande est prévue pour un temps de préchauffage et pour une alimentation de l'oxygène de coupe lors d'un déplacement adapté simultané pour le perçage avec passage à un mouvement de coupe.

3. Machine d'oxycoupage de bande continue suivant l'une quelconque des revendications 1 ou 2, caractérisée en ce que le bras porte-chalumeaux (5) est refroidi par eau et en ce que tous les conduits d'alimentation pour tous les chalumeaux (8) ou les buses d'alimentation en poudre de fer (9) sont situés à l'intérieur du bras, qui porte également tous les raccordements de buses avec les manchons interchangeables de chalumeaux.

4. Machine d'oxycoupage de bande suivant l'une quelconque des revendications 1 à 3, caractérisée en ce que le bras porte-chalumeaux (5) est subdivisé, dans la zone de la bande continue, en éléments de chalumeaux (10) interchangeables, qui dans leur longueur correspondent à l'écartement voulu des chalumeaux par rapport à la largeur de la bande continue (1) et sont munis de joints toriques pour les substances qui circulent, et qui sont équipés de collerettes pour le vissage entre eux et sur le bout du bras porte-chalumeaux.

5. Machine d'oxycoupage de bande continue, suivant l'une quelconque des revendications 1 à 4, caractèrisée en ce que la zone d'oxycoupage est couverte par un capot (11) et en ce que le bras porte-chalumeaux (5) avance sous ce capot (11) par une échancrure (13).

6. Machine d'oxycoupage de bande continue, suivant l'une quelconque des revendications 1 à 5, caractérisée en ce que la machine d'oxycoupage (3) est munie de deux bras porte-chalumeaux (5) écartés l'un de l'autre de prèférence de manière réglable pour l'exécution de deux coupes pour de plus courtes longueurs de pièces et en ce qu'elle comporte une commande d'avance de coupe commune pour ce faire ou bien deux commandes identiques.

7. Machine d'oxycoupage de bande continue suivant l'une quelconque des revendications 1 à 6, caractérisée en ce qu'est prévu un dispositif collecteur de scories (15, 16), pour l'évacuation des scories de coupe produites dans la zone de coupe.

8. Machine d'oxycoupage de bande continue suivant l'une quelconque des revendications 1 à 7, caractérisée en ce que sont prévus, dans la zone de coupe et de maintien à température, des rouleaux supports à bras en porte-à-faux (14) articulés, montés et commandés en dehors du capot (11) et du dispositif collecteur de scories (15, 16) pour le soutien de la bande continue (1).

9. Machine d'oxycoupage de bande continue suivant l'une quelconque des revendications 1 à 7, caractérisée en ce qu'est prévu une barre ou rouleau d'entrée et de pression (2) avant l'ouverture d'entrée (12) de la bande dans le capot de maintien à température (11).

10. Machine d'oxycoupage de bande continue suivant l'une quelconque des revendications 1 à 9, caractérisée en ce que les rouleaux de pression (2) et le rouleau de mesure (2) sont conçus comme un seul élément.

11. Machine d'oxycoupage de bande continue suivant l'une quelconque des revendications 1 à 10, caractérisée en ce que le chalumeau (8) est muni d'une pièce intercalaire (8a) dans laquelle est vissée une buse de coupe.

12. Machine d'oxycoupage de bande continue suivant l'une quelconque des revendications 1 à 11, caractérisée en ce que les chalumeaux (8) comportent des raccordements de buses montés sur le bras porte-chalumeaux (5).

13. Machine d'oxycoupage de bande continue, suivant la revendication 12, caractérisée en ce que les raccordements de buses sont munis de rallonges.

## Claims

1. A strip-casting flame cutting machine in continuous-casting plants for thermochemical cutting of very wide and thick material for rolling steel sheets, more particularly at a high output rate, and comprising a clamping device which synchronises the cast strip with the flame cutting machine movable along the strip for the flamecutting process, characterised in that the flame cutting machine is supported on a track (4) along only one side of the cast strip (1), and is equipped with a torch arm (5) on which at least two

5

torches (8, 10) are disposed seriatim and spaced apart in the cutting direction, and the first torch is provided for initial cutting and cutting from the edge of the cast strip (1) and the second torch (8) is adapted for autogenous perforation, initial cutting or cutting.

2. A flame cutting machine according to claim 1, characterised in that one or more flame torches (8) are equipped with a heating flame and an iron powder nozzle (9) for rapidly heating the material to the ignition temperature and a control is provided for a heating-up time and for switching on the cutting oxygen and simultaneously adjusting the perforating motion with a transition to cutting motion.

3. A flame cutting machine according to claim 1 or 2, characterised in that the torch arm (5) is water-cooled and carries all the supply lines for all the torches (8) or iron powder nozzles (9) in the interior and carries all nozzle holders with exchangeable torch connectors.

4. A flame cutting machine according to any of claims 1 to 3, characterised in that the torch arm (5) in the cast-strip zone is divided into exchangeable torch elements (10) which correspond in length to the desired spacing between torches across the cast strip (1) end are provided with O-ring seals for the flowing media and with flanges for screwing to one another end to the torch arm stump.

5. A flame cutting machine according to any of claims 1 to 4, characterised in that the flame-cutting zone is covered by a hood (11) and the torch arm (5) extends into the hood (11) through a slot (13).

6. A flame cutting machine according to any of claims 1 to 5, characterised in that the machine (3) is equipped with two preferably adjustably-spaced torch arms (5) for double cutting for shorter casting lengths and has a single common or two similar torch feed drives.

7. A flame cutting machine according to any of claims 1 to 6, characterised in that a collecting device (15, 16) is provided for removing the cutting slag produced in the on-line zone.

8. A flame cutting machine according to any of claims 1 to 7, characterised in that pivotable cantilever-arm supporting rollers (14) mounted outside the hood (11) and the slag collector (15, 16) are provided for supporting the cast strip (1) in the cutting and heat-retaining zone.

9. A flame cutting machine according to any of claims 1 to 7, characterised in that an inlet and press-down runner or roller (2) is provided in front of the slot (12) through which the strip enters the heat-retaining hood (11).

10. A flame cutting machine according to any of claims 1 to 9, characterised in that the press-down roller (2) and the measuring roller (2) form a single component.

11. A flame cutting machine according to any of claims 1 to 10, characterised in that the torch (8) is provided with an intermediate member (8a) into which a cutting nozzle is screwed.

12. A flame cutting machine according to any of claims 1 to 11, characterised in that the torches (8) comprise nozzle holders disposed on the torch arm (5).

13. A flame cutting machine according to claim 12, characterised in that the nozzle holders are provided with extension members.

Fig. 1

Fig. 2